Europäisches Patentamt

European Patent Office

Office européen des brevets

(11) Veröffentlichungsnummer: **0 322 578**

**A2**

(12) **EUROPÄISCHE PATENTANMELDUNG**

(21) Anmeldenummer: **88119933.5**

(22) Anmeldetag: **30.11.88**

(51) Int. Cl.4: **B24B 13/005**

(30) Priorität: **24.12.87 DE 3744117**

(43) Veröffentlichungstag der Anmeldung:
**05.07.89 Patentblatt 89/27**

(84) Benannte Vertragsstaaten:
**CH ES FR GB IT LI**

(71) Anmelder: **Wilhelm Loh Wetzlar**
**Optikmaschinen GmbH & Co. KG**
**Friedenstrasse 26 Postfach 2069**
**D-6330 Wetzlar(DE)**

(72) Erfinder: **Brück, Erhard**
**Kinzenbacher Strasse 37**
**D-6301 Heuchelheim(DE)**

(74) Vertreter: **Missling, Arne, Dipl.-Ing.**
**Patentanwalt Bismarckstrasse 43**
**D-6300 Giessen(DE)**

(54) **Vorrichtung, zum Zentrieren von optischen Linsen für die mechanische Halterung insbesondere beim Randschleifen und Facettieren.**

(57) Zum Zentrieren von optischen Linsen für die mechanische Halterung insbesondere beim Randschleifen und Facettieren bedient sich die Erfindung einer Vorrichtung mit einem verwindungssteifen Gehäuse (10), das Zentrierspindeln (18, 18′) mit Spannglocken (20, 20′) lagert, zwischen denen eine Linse (L) ausrichtbar und zur Schleifbearbeitung einspannbar ist. Ein motorischer Antrieb (M, R) wirkt auf einen Drehmomentteiler (50) der einen Führungskörper (52) zwischen axial und radial abgestützten Scheiben (58, 58′) aufweist. Deren Kraftschluß über einen Kugelkranz (54) mit steuerbarer Anpreßkraft, die über ein Druckstück (62) eingeleitet wird, gewährleistet absoluten Synchronlauf der geteilten Antriebswelle (14, 14′), die über Riementriebe (46, 46′) auf die Zentrierspindeln (18, 18′) wirkt.

Fig. 2

EP 0 322 578 A2

## Vorrichtung zum Zentrieren von optischen Linsen für die mechanische Halterung insbesondere beim Randschleifen und Facettieren

Die vorliegende Erfindung betrifft eine Vorrichtung zum Zentrieren von optischen Linsen für die mechanische Halterung insbesondere beim Randschleifen und Facettieren gemäß dem Oberbegriff von Anspruch 1.

Gemäß der DE-PS 1 004 516 hat man hierzu die Linse mit hohem Druck zwischen zwei Glocken eingespannt, damit sich ihre Lage nicht mehr selbsttätig ändert. Zum Zentrieren der Linse wurden während des Spannvorganges die Spannglokken durch Ultraschall in Schwingungen versetzt, um die ruhende Reibung zwischen Glocke und Linse in eine niedrigere Gleitreibung umzuwandeln. Dieser Übergang erfolgte jedoch sprunghaft, wodurch häufig Beschädigungen der Linse mit unerwünschtem Materialabtrag auftraten.

Man hat ferner versucht, die Spannglocken beim Einspannen der Linse mit entgegengesetztem Drehsinn anzutreiben. Auch hierbei besteht ein hohes Beschädigungsrisiko, so daß sich Schleifspuren in Form von in die Linsenoberfläche eingeschnittenen Ringen kaum vermeiden lassen.

In der DE-AS 21 48 102 wurde vorgeschlagen, auf der höhenunveränderlichen Spannglocke einen piezokeramischen Rohrschwinger anzuordnen, der elektrisch über Schwellenwertschalter so gesteuert wird, daß die Spannglocke bei erreichen eines vorgegebenen Druckes absinkt, wodurch der Schwingungsgenerator abgeschaltet wird. Der Piezoschwinger dient gleichzeitig zum Prüfen des Spanndruckes, dem die Schwingungsamplitude geregelt angepaßt wird. Bei dieser Anordnung sind Elektronik-Unsicherheiten nachteilig. Ferner hat der Schwinger eine nicht unbeachtliche Axialdruckempfindlichkeit. Durch die Druckbelastung beim Einspannen entsteht eine Vorspannung; die Abstützung des Schwingers ist daher problematisch.

Aus der DE-OS 31 39 873 ist eine Vorrichtung bekannt, bei der Unregelmäßigkeiten eines Zahnradantriebes ausgenutzt werden, um Relativbewegungen zwischen Linse und Spannglocken zu erzeugen. Als Ausgleichseinrichtung ist ein Waagebalken-Differential in einem Kegelrad-Getriebezug zwischen den beiden Teilen einer zweiteiligen Zentrierspindel und Antriebswelle vorgesehen. Für eine Druckplatte der oberen, axialbeweglichen Spindel ist ein hydraulischer Spannzylinder vorhanden. Infolge der hohen Reibung der Spannspindel in ihrer Gleitlagerung ist jedoch eine feine Regulierung des Einspanndruckes schwer zu realisieren, so daß auch diese Vorrichtung nur begrenzt anwendbar ist.

Aufgabe der Erfindung ist es, unter Überwindung der Nachteile des Standes der Technik einen verbesserten Antrieb für die Zentrierspindel zu schaffen, mit dem bei zuverlässiger Einspannung der Linse deren beschädigungsfreie Bearbeitung möglich ist. Außderdem soll das wirksame Drehmoment in jedem Augenblick feinfühlig einstellbzw. regelbar sein. Der Grundgedanke der Erfindung ist im kennzeichnenden Teil von Anspruch 1 angegeben. Ausgestaltungen sind Gegenstand der Ansprüche 2 bis 14.

Indem erfindungsgemäß die Antriebswelle über Riementriebe mit den Zentrierspindeln antriebsverbunden ist, kann man mit hoher Drehzahl arbeiten und entsprechend geringen Oberflächenabtrag bei hoher Zerspannungsleistung am Umfang erzielen. Der Riementrieb ersetzt ein herkömmliches Getriebe, so daß Zahnräder mit ihrem im Mikrobereich unregelmäßigen Abwälzverhalten aus dem Antriebsstrang der Zentrierspindeln ausgeschaltet sind und deren Synchronlauf gesichert ist.

Zusätzlich kann gemäß Anspruch 2 die Antriebswelle über einen weiteren Riementrieb mit dem Motor antriebsverbunden sein. Gemäß Anspruch 3 ist ferner vorgesehen, daß dieser Riementrieb über einen Drehmomentteiler auf die Antriebswelle wirkt. Diese ist laut Anspruch 4 zweiteilig ausgebildet, wobei der Drehmomentteiler in an sich bekannter Weise zwischen ihren beiden Teilen angeordnet ist. Mittels einer vorzugsweise in Höhe der Spannglocken parallel zur Achsrichtung angeordneten Lagerung ist die Antriebswelle und/oder der Drehmomentteiler im Gehäuse abgestützt. Dies ermöglicht eine sehr feinfühlige Anpassung von Spannkraft und Drehmoment an die jeweils gegebene Linsengeometrie. Besonders vorteilhaft ist es, daß die Lagerung für die abtriebsseitigen Wellenteile gemäß Anspruch 5 leichtgängig und paßgenau ausgebildet ist, insbesondere mit exakt fluchtenden Radiallagern.

Der Drehmomentteiler soll stufenlos und ruckfrei arbeiten. Er kann nach Anspruch 6 einen Führungskörper zwischen zwei wälzgelagerten Scheiben aufweisen, die jeweils mit einem der Wellenteile antriebsverbunden sind. Am Außenumfang kann dieser Führungskörper nach Anspruch 7 als Riemenscheibe für den motorischen Riementrieb ausgebildet sein. Dieser Aufbau ist konstruktiv einfach; er gewährleistet einen hohen Wirkungsgrad des Antriebes bei großer Führungsgenauigkeit.

Eine wichtige Weiterbildung der Erfindung, für die selbständiger Schutz in Anspruch genommen wird, besteht gemäß Anspruch 8 darin, daß der Führungskörper ein insbesondere scheibenförmiger Kugelkäfig ist und daß die tellerförmig gestaltete Scheibe mit ihren Umfangsteilen auf einen Kugelkranz laufen. Ferner kann der Führungskörper nach Anspruch 14 Wellenstümpfe mit Schultern aufweisen, die jeweils über Axial- und Radiallager in den zugeordneten Scheiben abgestützt sind. Dank der auf den Friktionstellern mit Relativbewegungen abrollenden Kugeln überwindet der Kraftschluß zwischen der Linse und den Spannglocken die innere Reibung des Drehmomentteilers, so daß durch den Bewegungsausgleich ein absoluter Synchronlauf der Zentrierspindeln gewährleistet ist.

Günstig ist es, wenn der Führungskörper des Drehmomentteilers nach Anspruch 9, mit einstell- oder regelbarem Kraftschluß zwischen den Scheiben drehbar gelagert ist, wobei wenigstens eine Scheibe laut Anspruch 10 durch ein druckmittelbetätigtes Druckstück auf die andere Scheibe zu axial belastbar ist. Die gemäß Anspruch 11 hierzu vorgesehene Spanneinrichtung kann über ein Druckmittel betätigbar sein, das gleichzeitig einen Kolben für das Druckstück beaufschlagt. Letzteres ist gemäß Anspruch 12, in dem eine Scheibe axial verschieblich geführt und vorzugsweise axial elastisch abgestützt, z. B. mit einer Federung nach Anspruch 13.

Der Drehmomentteiler besteht also aus einer oberen und einer unteren Scheibe. Ihre Mitnahme erfolgt stufenlos und ruckfrei durch die im Führungskörper gelagerten Kugeln, wozu die Anpresskraft über das Druckstück auf die untere und obere Scheibe das Mitnahmemoment einstellt.

Weitere Merkmale, Einzelheiten und Vorteile der Erfindung ergeben sich aus dem Wortlaut der Ansprüche sowie aus der folgenden Beschreibung eines Ausführungsbeispiels anhand der Zeichnung. Darin zeigen:

Fig. 1 eine Axialschnitt-Gesamtansicht einer Zentriervorrichtung und

Fig. 2 eine Ausschnittvergrößerung einer Antriebsanordnung der Vorrichtung von Fig. 1.

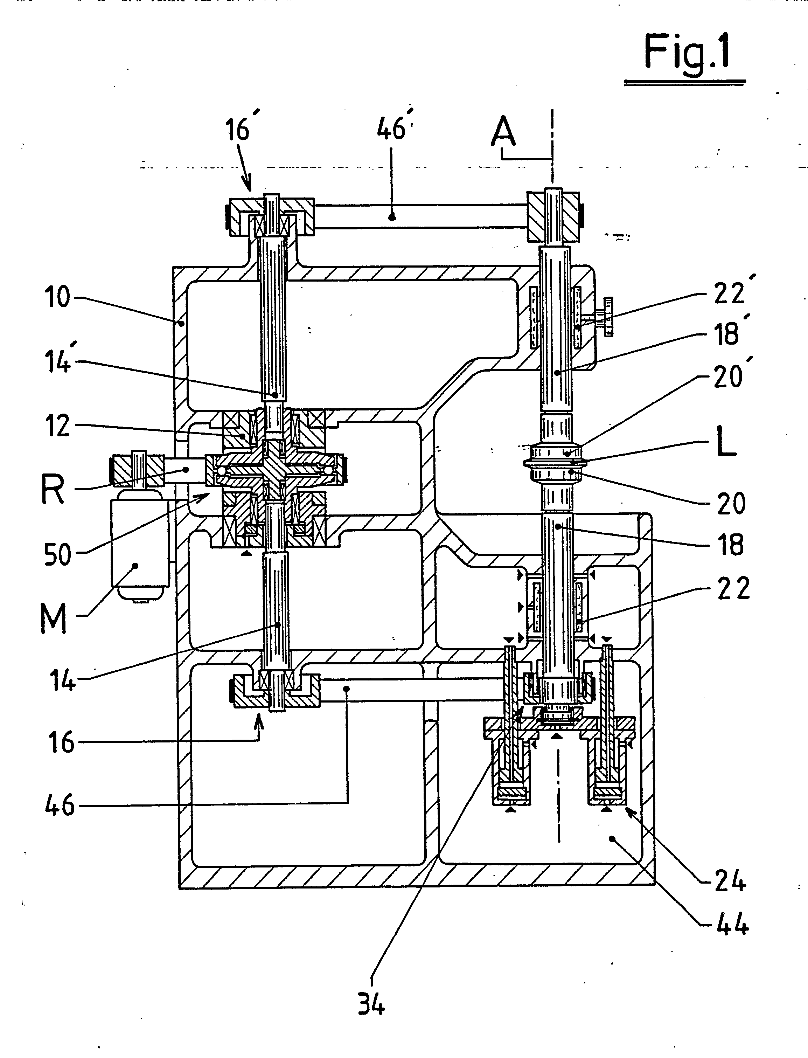

Die in Fig. 1 veranschaulichte Zentriervorrichtung hat ein Gehäuse 10 mit einer Wellenlagerung 12 und einer zweiteiligen Antriebswelle 14, 14'. Diese treibt über Getriebeelemente 16, 16' und die Riementriebe 46, 46' eine untere Zentrierspindel 18 sowie eine obere Zentrierspindel 18' an. Die beiden Zentrierspindeln tragen Spannglocken 20 bzw. 20', zwischen denen eine Linse L einspannbar ist. Im Gehäuse 10 sind die Zentrierspindeln 18, 18' durch Führungs- und Spannlager 22, 22' fluchtend gelagert, und zwar in vorragenden Teilen des C-förmigen Gehäuses 10, das eine Wabenstruktur hat und infolgedessen hohe Verwindungssteifigkeit besitzt. Im unteren vorragenden Teil des Gehäuses 10 ist eine Kammer 44 angeordnet, in welcher sich eine Spanneinrichtung 24 für die untere Zentrierspindel 18 befindet.

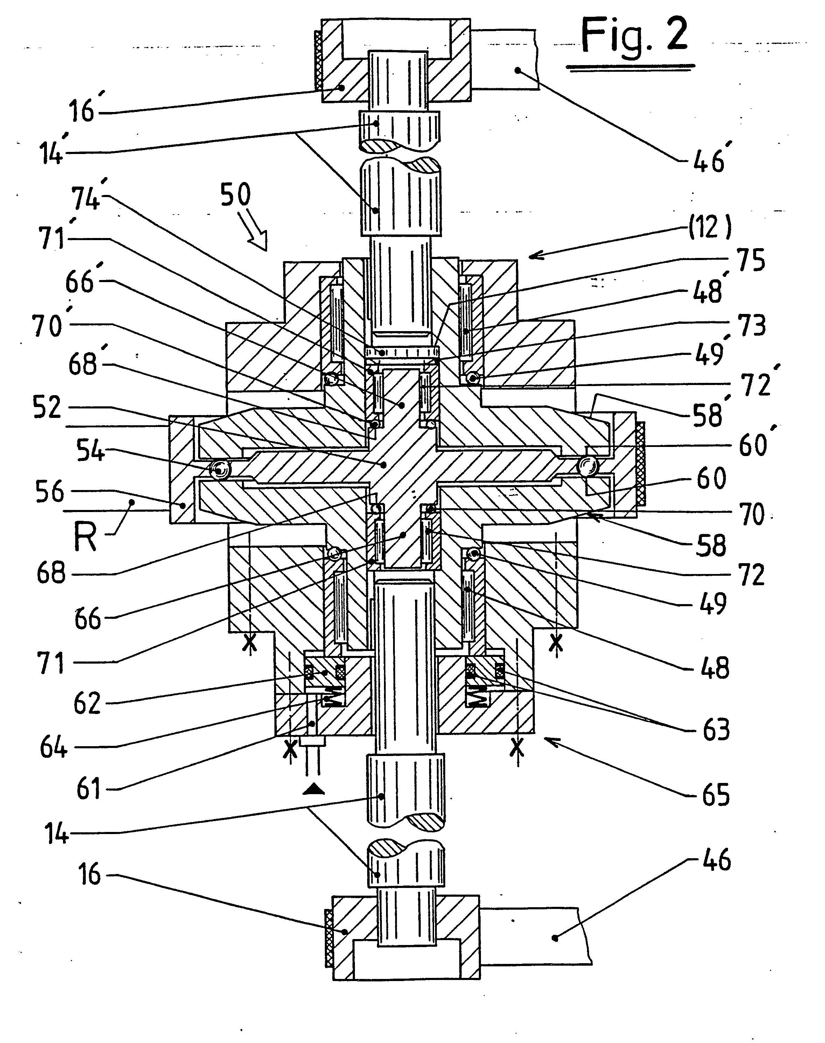

Das zum Randschleifen und Facettieren einer Linse L notwendige Drehmoment wird von einem Antriebsmotor M erzeugt und über einen Riementrieb R auf einen Drehmomentteiler 50 übertragen. Wie insbesondere aus Fig. 2 ersichtlich ist, weist der Drehmomentteiler 50 einen Führungskörper 52 auf, der als Kugelkäfig mit einer Umfangs-Riemenscheibe 56 ausgebildet sein kann. Letztere ist Bestandteil des Riementriebs R. Nahe seinem Umfang weist der Führungskörper bzw. Kugelkäfig 52 einen Kugelkranz 54 auf, dessen Kugeln zwischen zwei prinzipiell gleichartig aufgebauten Scheiben 58, 58' nahe deren Rand 60, 60' sitzen. Durch Kraftschluß der beiden Scheiben 58, 58' an den Kugeln des Kranzes 54 wird das vom Riementrieb R eingeleitete Drehmoment stufenlos und ruckfrei auf die Antriebswellen 14, 14' und von dort über die Getriebeelemente 16, 16' und den Riementrieben 46, 46' auf die Zentrierspindeln 18, 18' übertragen. Durch die mittels der Spanneinrichtung 24 erzeugte Spannkraft wird eine Linse L zwischen den Zentrierglocken 20, 20' ausgerichtet und zur Bearbeitung eingespannt.

Hierbei ist ein Druckstück 62 wesentlich, das als Ringkolben ausgebildet und mittels Dichtungsringen 63 gegenüber der Lagerung 12 abgedichtet sein kann. In Axialrichtung ist das Druckstück 62 über Druckfedern 64 an einer Stützplatte 65 abgestützt, die eine Bohrung 61 für einen Druckmittelanschluß aufweist.

Der scheibenförmige Führungskörper 52 hat beiderseits Wellenstümpfe 66, 66' mit Schultern 68, 68', an denen sich Axiallager 70, 70' für Führungsbuchsen 71, 71' abstützen. Letztere sind in den Scheiben 58, 58' zentrisch gleitbeweglich geführt und über Radiallager 72, 72' an den Wellenstümpfen 66, 66' abgestützt. Über Nut und Feder sind die Antriebswellen 14, 14' mit den Scheiben 58, 58' drehfest verbunden. Radiallager 48, 48' und Axiallager 49, 49' sorgen für exakte Führung und Abstützung der Scheiben 58, 58' in der Lagerung 12. Die Antriebswellen 14, 14' stehen über die Getriebeelemente 16, 16', zu denen Riementriebe 46, 46' gehören, mit den beiden Zentrierspindeln 18, 18' in Antriebsverbindung. Zur axialen Abstützung kann zwischen der oberen Führungsbuchse 71' und einer Mitnehmerscheibe 74, die an einer Schulter 75 in der oberen Scheibe 58' anliegt, eine Wellfeder 73 angeordnet sein.

Die Funktionsweise der Vorrichtung ist folgende. An den Berührungslinien zwischen den Spannglocken 20, 20' und der Linsenfläche wird die Spannkraft wirksam. Durch die Reibung zwischen der Linse L und den Spannglocken 20, 20' wird das über die Zentrierspindeln 18, 18' eingeleitete Drehmoment auf die Linse L übertragen. Es hängt ab von der an den Berührungslinien erzeugten Anpreßkraft, von der an der Einspannung wirksamen Reibung und vom Durchmesser der Berührungslinien an den Spannglocken 20, 20′. Bei der Bearbeitung muß dieses Drehmoment stets größer sein als das am Linsen rand auftretende Schleifmoment. Bei größeren Linsen wird daher ein hohes Drehmoment mit hohen Einspannkräften notwendig; allerdings ist dann auch der Berührungsdurchmesser größer, so daß die an den Linsenoberflächen wirksame spezifische Flächenpressung günstig beeinflußt wird.

Erfindungsgemäß wird eine zuverlässige Drehmoment-Übertragung dadurch gewährleistet, daß der in der unteren Scheibe 58 des Drehmomentteilers 50 axialverschieblich angeordnete Ringkolben 62 mit einem unter erhöhtem Druck stehendem Medium beaufschlagt wird. An der unteren Scheibe 58 wirkt dadurch eine größere Axialkraft, so daß der Kraftschluß des Kugelkranzes 54 zwischen den Scheiben 58, 58′ gesteigert und damit auch das zu übertragende Drehmoment sicher weitergeleitet wird. Ist der Ringkolben bzw. das Druckstück 62 in der unteren Scheibe 58 im Verhältnis zu den Spannzylindern der Spanneinrichtung 24 passend bemessen, so kann mit dem gleichen Druckmedium gearbeitet werden, wodurch bei einer Erhöhung des Drehmoments an der Linse L eine entsprechende Drehmomentsteigerung am Drehmomentteiler 50 stattfindet.

Für den Synchronlauf der Zentrierspindeln 18, 18′ sorgt der Bewegungsausgleich im Drehmomentteiler 50 durch die Relativbewegungen der als Friktions-Teller gestalteten Scheiben 58, 58′. An deren als Laufflächen ausgebildeten Rändern 60, 60′ rollen die Kugeln des Kranzes 54, wobei Relativbewegungen ohne Beeinflussung des Kraftschlusses möglich sind.

Man erkennt, daß die erfindungsgemäße Vorrichtung eine sehr günstige Ansprechempfindlichkeit des Drehmomentteilers 50 sicherstellt. Zwar steigt sein Reibmoment bei höherer Druck belastung in den Lagerstellen und mithin der zwischen den Scheiben 58, 58′ eingespannten Kugeln des Kranzes 54, doch wird diese Wirkung durch die höhere Einspannkraft und den größeren Berührungsdurchmesser der Linse L zwischen den Spannglocken 20, 20′ vorteilhaft ausgeglichen. Bei kleinen Linsendurchmessern und entsprechend geringeren Drehmomenten ist die Druckbeaufschlagung der Friktions-Teller 58, 58′ niedriger, so daß eine höhere Ansprechempfindlichkeit gegeben ist.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Ansprüche

1. Vorrichtung zum Zentrieren von optischen Linsen für die mechanische Halterung insbesondere beim Randschleifen und Facettieren, mit einem Gehäuse (10), in dem eine Antriebswelle (14, 14′) mit Drehmomentteiler (50) gelagert ist, um über Getriebeelemente (16, 16′) zwei in Achsrichtung (A) fluchtende Zentrierspindeln (18, 18′) motorisch anzutreiben, deren einander zugewandte Enden Spannglocken (20, 20′) tragen, zwischen denen zur Bearbeitung eine insbesondere bei senkrechter Achsrichtung (A) waagerechte Linse (L) mittels einer auf einer Zentrierspindel (18) bzw. Spannglocke (20) wirkenden Spanneinrichtung (24) einspannbar ist, dadurch gekennzeichnet, daß die Antriebswelle (14, 14′) über Riementriebe (46, 46′) mit den Zentrierspindeln (18, 18′) antriebsverbunden ist.

2. Vorrichtung nach Anspruch 1, dadurch gekennzeichnet, daß die Antriebswelle (14, 14′) über einen Riementrieb (R) mit dem Motor (M) antriebsverbunden ist.

3. Vorrichtung nach Anspruch 2, dadurch gekennzeichnet, daß der Riementrieb (R) über den Drehmomentteiler (50) auf die Antriebswelle (14, 14′) wirkt.

4. Vorrichtung nach einem der Ansprüche 1 bis 3, wobei die Antriebswelle (14, 14′) zweiteilig ausgebildet und der Drehmomentteiler (50) zwischen ihren beiden Teilen angeordnet ist, dadurch gekennzeichnet, daß die Antriebswelle (14, 14′) und/oder der Drehmomentteiler (50) im Gehäuse (10) mittels einer Lagerung (12) abgestützt ist, die vorzugsweise in Höhe der Spannglocken (20, 20′) parallel zur Achsrichtung (A) angeordnet ist.

5. Vorrichtung nach Anspruch 4, dadurch gekennzeichnet, daß die Lagerung (12) für die abtriebsseitigen Wellenteile (14, 14′) leichtgängig und paßgenau ausgebildet ist, insbesondere mit exakt fluchtenden Radiallagern (48, 48′).

6. Vorrichtung nach einem der Ansprüche 4 oder 5, dadurch gekennzeichnet, daß der Drehmomentteiler (50) einen Führungskörper (52) zwischen zwei wälzgelagerten Scheiben (58, 58′) aufweist, die jeweils mit einem der Wellenteile (14, 14′) antriebsverbunden sind, so daß dieser stufenlos und ruckfrei arbeitet.

7. Vorrichtung nach einem der Ansprüche 2 bis 6, dadurch gekennzeichnet, daß der Führungskörper (52) am Außenumfang (56) als Riemenscheibe für den motorischen Riementrieb (R) ausgebildet ist.

8. Vorrichtung nach Anspruch 6 oder 7, dadurch gekennzeichnet, daß der Führungskörper (52) ein insbesondere scheibenförmiger Kugelkäfig ist und daß die tellerförmig gestalteten Scheiben (58, 58′) mit ihren Umfangsteilen (60, 60′) auf einem Kugelkranz (54) laufen.

9. Vorrichtung nach Anspruch 6 bis 8, dadurch gekennzeichnet, daß der Führungskörper (52) mit dem Kugelkranz mit einstell- oder regelbarem Kraftschluß zwischen den Scheiben (58, 58') drehbar gelagert ist.

10. Vorrichtung nach Anspruch 9, dadurch gekennzeichnet, daß wenigstens eine Scheibe (58) durch ein druckmittelbetätigtes Druckstück (62) auf der anderen Scheibe (58') zu axial belastbar ist.

11. Vorrichtung nach Anspruch 10, dadurch gekennzeichnet, daß die Spanneinrichtung (24) druckmittelbetätigbar und das Druckstück (62) ein Kolben ist, der mit demselben Druckmittel beaufschlagbar ist wie die Spanneinrichtung (24).

12. Vorrichtung nach Anspruch 11, dadurch gekennzeichnet, daß das Druckstück auf die Rückseite einer Scheibe (58) wirkt und axialverschieblich zu dieser geführt und vorzugsweise axial elastisch abgestützt ist.

13. Vorrichtung nach Anspruch 12, dadurch gekennzeichnet, daß das Druckstück (62) sich unter Vorspannung an einer Stützplatte (65) der Lagerung (12) abstützt, bevorzugt über Druckfedern (64).

14. Vorrichtung nach wenigstens einem der Ansprüche 6 bis 13, dadurch gekennzeichnet, daß der Führungskörper (52) Wellenstümpfe (66, 66') mit Schultern (68, 68') aufweist, die jeweils über Axial- und Radiallager (70, 70'; 72, 72') in der zugeordneten Scheibe (58, 58') abgestützt sind.

Fig.1

Fig. 2